# FASCICULE DE BREVET EUROPEEN

(11) **EP 3 298 466 B1**
(45) Date de publication et mention de la délivrance du brevet: **04.05.2022**
(21) Numéro de dépôt: 16726490.2
(22) Date de dépôt: 12.05.2016
(51) Int. Cl.: G05D 1/08, B64D 31/06, B64B 1/12, B64B 1/32

(54) **AERONEF ET PROCEDE DE STABILISATION D'UN AERONEF**
FLUGZEUG UND VERFAHREN ZUR STABILISIERUNG EINES FLUGZEUGS
AIRCRAFT AND METHOD OF STABILIZING AN AIRCRAFT

(30) Priorité: 22.05.2015 FR 1554647
(43) Date de publication de la demande: 28.03.2018
(73) Titulaire: Flying Whales, 92150 Suresnes (FR)
(72) Inventeur: KUHLMANN, Hervé, François, 92120 Montrouge (FR)
(74) Mandataire: IPAZ
(86) Numéro de dépôt international: PCT/EP2016/060675
(87) Numéro de publication internationale: WO 2016/188759

(56) Documents cités:
- FR-A1- 2 772 714
- US-A1- 2005 035 242
- US-A1- 2009 048 723
- VERMILLION CHRIS ET AL: "Model-Based Plant Design and Hierarchical Control of a Prototype Lighter-Than-Air Wind Energy System, With Experimental Flight Test Results", IEEE TRANSACTIONS ON CONTROL SYSTEMS TECHNOLOGY, IEEE SERVICE CENTER, NEW YORK, NY, US, vol. 22, no. 2, 1 mars 2014 (2014-03-01), pages 531-542, XP011540231, ISSN: 1063-6536, DOI: 10.1109/TCST.2013.2263505 [extrait le 2014-02-13]

## Description

### Domaine technique

La présente invention concerne un aéronef. Elle concerne aussi un procédé mis en œuvre par un aéronef.

Un tel aéronef ou procédé permet une stabilisation de l'aéronef subissant des variations de vent tels que des rafales ou des turbulences. Le domaine de l'invention est plus particulièrement mais de manière non limitative celui des aérostats.

### Etat de la technique antérieure

La stabilité de vol en environnement turbulent (notamment pour améliorer le confort des passagers) est un sujet récurrent dans le milieu aéronautique.

La détection et l'anticipation de rafales de vent sont des éléments primordiaux dans la tenue du plan de vol d'un aéronef. Cela est encore plus important pour un aérostat, compte tenu de sa grande prise au vent et de sa relative faible manœuvrabilité due à son inertie.

On connait plusieurs solutions de l'état de l'art pour détecter ou anticiper de telles rafales pour un aéronef:
- des technologies « de pilotage » qui reposent sur une action par le ou les pilotes et suite à une prise d'information affichée en cockpit,
- des technologies « d'avertissement » qui reposent sur une détection de turbulences afin d'être en mesure de prévenir les passagers du passage en zone de turbulences,
- des technologies « d'absorption » qui reposent sur des systèmes mécaniques (absorbeur de rafales) permettant de stabiliser le vol.

Le document US 2009/048723 A1 (NUGENT MARK R et al) divulgue un aéronef comprenant un capteur de mesure de vent, des actionneurs prévus pour modifier une position de l'aéronef en fonction de consignes reçues par ces actionneurs, et une base de données embarquée dans l'aéronef, cette base de données associant différentes valeurs de mesure de vent à différentes consignes à l'attention des actionneurs. Un processeur est prévu pour recevoir des valeurs de mesure de vent en provenance du capteur, rechercher à l'intérieur de la base de données une correspondance des valeurs de mesure de vent en provenance du capteur, et déterminer, en fonction de cette recherche, des consignes à envoyer aux actionneurs.

Plusieurs problèmes se posent :
- temps de réaction : les temps de réaction peuvent être trop longs par rapport à la soudaineté de bourrasques ou rafales ou turbulences (notamment pour les technologies « de pilotage »),
- vol stationnaire ou direction de vol : certaines technologies (notamment « d'absorption ») ne sont en général pas efficaces en vol stationnaire mais que lors de vols de croisières, à des vitesses importantes, et en outre leur fonctionnement n'autorise que la stabilisation dans la direction du vol,
- mise en danger lors d'un vol stationnaire : lors des phases de chargement / déchargement en vol stationnaire un aérostat est extrêmement vulnérable au vent turbulent. L'effet de rafales peut en effet générer des instabilités fortes menant, dans les cas extrêmes, à la mise en danger de l'aérostat.
- précision d'un vol stationnaire : dans le cas du positionnement d'une charge la précision du vol stationnaire peut être très importante. Des rafales peuvent venir très largement dégrader cette précision au détriment de ses capacités opérationnelles.

Le but de la présente invention est de résoudre au moins un des problèmes ou désavantages susmentionnés.

### Exposé de l'invention

Cet objectif est atteint avec un aérostat selon la revendication 1.

L'au moins un capteur est de préférence agencé pour mesurer un vent à une fréquence de mesure d'au moins 0,1Hz, de préférence au moins 1Hz. Les moyens d'analyse et de commande sont de préférence agencés pour ou programmés pour déterminer des consignes à envoyer aux actionneurs à une fréquence d'au moins 0,1Hz, de préférence au moins 1Hz.

L'aéronef selon l'invention est de préférence agencé pour effectuer un vol stationnaire.

Les valeurs de mesure de vent peuvent comprendre :
- une amplitude ou une variation d'amplitude du vent, et/ou
- une provenance ou une direction du vent, ou une variation de provenance ou de direction du vent.

Les moyens d'analyse et de commande peuvent être agencés pour ou programmés pour envoyer directement les consignes aux actionneurs, sans nécessiter d'étape de validation ou d'accord d'un intervenant humain.

L'aéronef selon l'invention peut comprendre en outre des moyens pour mesurer les effets, sur la position de l'aéronef, des consignes déterminées puis envoyées aux actionneurs. Dans ce cas, les moyens d'analyse et de commande peuvent en outre être agencés pour ou programmés pour modifier la base de données en fonction des effets mesurés.

Les actionneurs peuvent comprendre des moyens de propulsion de l'aéronef et/ou des gouvernes de l'aéronef.

Suivant encore un autre aspect de l'invention, il est proposé un procédé

### la revendication 7.

L'au moins un capteur mesure de préférence un vent à une fréquence de mesure d'au moins 0,1Hz, de préférence au moins 1Hz. Les moyens d'analyse et de commande déterminent de préférence des consignes à envoyer aux actionneurs à une fréquence d'au moins 0,1Hz, de préférence au moins 1Hz.

Au cours de ce procédé selon l'invention, l'aéronef peut effectuer un vol stationnaire.

Les valeurs de mesure de vent peuvent comprendre :
- une amplitude ou une variation d'amplitude du vent, et/ou
- une provenance ou une direction du vent, ou une variation de provenance ou de direction du vent.

Les moyens d'analyse et de commande envoient de préférence directement les consignes aux actionneurs, sans étape de validation ou d'accord d'un intervenant humain.

Le procédé selon l'invention peut comprendre en outre une mesure des effets, sur la position de l'aéronef, des consignes déterminées puis envoyées aux actionneurs. Dans ce cas, le procédé selon l'invention peut comprendre en outre une modification, par les moyens d'analyse et de commande, de la base de données en fonction des effets mesurés.

Les actionneurs peuvent comprendre des moyens de propulsion de l'aéronef et/ou des gouvernes de l'aéronef.

### Description des figures et modes de réalisation

D'autres avantages et particularités de l'invention apparaîtront à la lecture de la description détaillée de mises en oeuvre et de modes de réalisation nullement limitatifs, et des dessins annexés suivants :
- la figure la est une vue schématique de dessus d'un premier mode de réalisation d'aéronef 1 selon l'invention,
- la figure 1b est une vue schématique de profil du premier mode de réalisation d'aéronef 1 selon l'invention,
- la figure 2 est une vue schématique de dessus de l'aéronef 1 selon l'invention vers lequel se dirige une rafale de vent 3,
- la figure 3 est une vue schématique de dessus de l'aéronef 1 selon l'invention compensant les effets de ce vent 3,
- la figure 4 est une vue schématique d'un procédé selon l'invention mis en oeuvre dans l'aéronef 1.

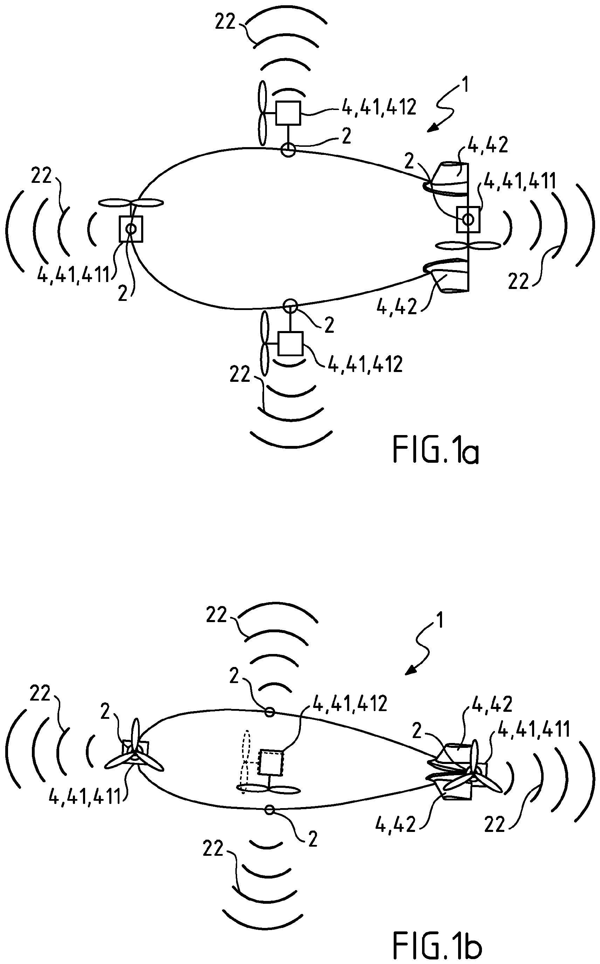

On va tout d'abord décrire, en référence aux figures 1a, 1b, 2, 3 et 4, un premier mode de réalisation d'aéronef 1 selon l'invention.

Dans la présente description, le terme aéronef désigne tout moyen de transport (de personne ou de biens) capable d'évoluer en volant.

L'aéronef 1 est agencé pour effectuer un vol stationnaire. On veut dire par là que l'aéronef 1 est capable (en l'absence de vent) d'avoir un vol selon une position fixe par rapport au sol, comme cela est le cas pour un dirigeable ou un hélicoptère.

Plus particulièrement, l'aéronef 1 consiste en un aérostat.

Dans la présente description, le terme aérostat est un aéronef dont la sustentation est assurée par la poussée d'Archimède (contrairement à un aérodyne) comme par exemple un ballon avec nacelle ou un dirigeable.

L'aérostat 1 (un véhicule dont la sustentation est assurée par un gaz plus léger que l'air ambiant l'entourant, c'est-à-dire un ballon ou un dirigeable) est un dirigeable destiné à du transport de charge.

Dans cet exemple non limitatif l'aérostat 1 utilisé est un dirigeable ayant une longueur de 70 m et un volume de 6000m³ d'Hélium. L'aérostat 1 se déplace horizontalement à l'aide de quatre moteurs 41 (électriques ou thermiques) qui sont répartis tous les 90° sur le pourtour de l'aérostat 1 (de préférence sensiblement dans un plan horizontal parallèle au plan des figures 1a, 2 et 3), dont :
- deux moteurs avant/arrière 41, 411 qui ont un sens de propulsion réversible, et
- deux moteurs latéraux 41, 412 qui sont vectorisables ou orientables (fonctionnant aussi bien pour une propulsion verticale vers le haut ou vers le bas et pour une propulsion horizontale vers l'avant ou vers l'arrière) et qui ont en outre un sens de propulsion réversible.

Les moteurs 41 sont par exemple des moteurs thermiques d'une puissance unitaire P = 160 kW de référence FR305-230E de chez SMA, équipés d'hélices contrarotatives deux à deux.

Afin d'assurer un positionnement suffisamment précis de la charge transportée, l'aéronef 1 est équipé d'un système de stabilisation (comprenant les moyens 2, 4, 5 et 6 décrits par la suite) actif du vol de l'aéronef 1, efficace en environnement turbulent et en vol stationnaire. Le système de stabilisation permet, à partir d'une mesure de télédétection de vent (vitesse et intensité) d'anticiper la réponse comportementale de l'aéronef 1 dans toutes les directions, et donc d'agir sur des actionneurs 4 pour garantir sa stabilité.

L'aéronef 1 comprend au moins un capteur 2, agencé pour mesurer du vent 3. On entend par vent 3 dans la présente description tout mouvement d'air (de préférence en direction de l'aéronef 1), comprenant de préférence une ou plusieurs turbulence(s) et/ou une ou plusieurs rafale(s) et/ou une ou plusieurs bourrasque(s).

L'au moins un capteur 2 est agencé pour mesurer à distance le vent 3 (en émettant un signal 22), c'est-à-dire avant que ce vent 3 ne soit en contact de l'aéronef 1. Chaque capteur 2 peut ainsi comprendre un ou plusieurs LIDAR (pour « light detection and ranging », qui est une technologie de mesure à distance basée sur l'analyse des propriétés d'un faisceau de lumière renvoyé vers son émetteur) et/ou un ou plusieurs SODAR (pour « Sonic Detection And Ranging », qui est un capteur qui utilise les ondes sonores pour mesurer la vitesse et la direction des vents).

Les capteurs 2 sont agencés ensemble pour mesurer des vents 3 selon plusieurs directions ou provenances. Plus précisément, les capteurs 2 de mesure sont disposés de manière à acquérir les informations dans toutes les directions autour de l'aéronef 1, pour détecter les rafales du vent 3.

L'au moins un capteur 2 comprend plusieurs capteurs 2 (au moins quatre, de préférence au moins six capteurs 2). Le mode de réalisation illustré sur les figures comprend six capteurs 2.

Parmi ces (six) capteurs, plusieurs (quatre, cf Figure 1a ) capteurs 2 sont répartis dans un même plan horizontal (un plan horizontal étant défini comme perpendiculaire à la verticale c'est-à-dire à la direction d'attraction de la gravitation).

Parmi ces (six) capteurs, plusieurs (quatre, cf Figure 1b ) capteurs 2 sont répartis dans un même plan vertical.

Dans l'exemple illustré sur les figures, l'aérostat 1 est équipé de plusieurs capteurs 2 de type LIDAR (laser pulsé, longueur d'onde λ = 1,54 µm) permettant de mesurer la vitesse du vent 3 dans toutes les directions horizontales. Pour cela sont positionnées par exemple 24 lignes de mesure sur le pourtour de l'aérostat 1. Chaque capteur 2 est agencé pour mesurer la vitesse de vent 3 à une distance comprise entre 40 m et 400 m de l'aérostat 1 avec une porte distance (ou « range gate ») de 10 ou 20 m (ce qui correspond à 10 mesures simultanées par faisceau). Une mesure de vent vertical (à partir d'un capteur 2 équipé de quatre faisceaux par exemple) permet d'accroitre la précision de la mesure. Chaque Lidar embarqué 2 est par exemple un Windiris. Chaque capteur 2 comprend au moins deux lignes de mesure permettant de mesurer deux coordonnées de la vitesse du vent. Dans le présent mode de réalisation, chaque capteur 2 comprend quatre lignes de mesure permettant de mesurer une troisième coordonnée de vitesse du vent. L'aéronef 1 comprend au moins six capteurs LIDAR soit au moins 24 lignes de mesure.

L'au moins un capteur 2 est agencé pour mesurer un vent 3 à une fréquence de mesure d'au moins 0,1Hz, de préférence au moins 1Hz.

L'aéronef 1 comprend des actionneurs 4, agencés pour modifier une position de l'aéronef 1 en vol en fonction de consignes reçues par ces actionneurs 4.

Les actionneurs 4 comprennent des moyens de propulsion (les moteurs 41) et des surfaces de contrôle ou gouvernes 42.

Ce mode de réalisation comprend quatre moteurs 41 et quatre gouvernes 42.

Les gouvernes de vol 42 sont des dispositifs mobiles, qui permettent de produire ou de contrôler les mouvements de l'aéronef 1, par exemple l'incidence ou l'incidence latérale de l'aéronef 1.

Ces actionneurs 4 peuvent être dédiés au système de stabilisation selon l'invention ou non.

L'aéronef 1 comprend une base de données 6 informatique et/ou électronique, embarquée dans l'aéronef 1. La base de données 6 associe différentes valeurs de mesure de vent à différentes consignes à l'attention des actionneurs 4. Ces consignes sont prévues pour compenser l'effet, sur l'aéronef 1, du vent 3 ayant des valeurs de mesure associées à ces consignes dans la base 6.

Cette base de données 6 est construite :
- Par des calculs aérodynamiques qui simulent les effets de plusieurs valeurs de mesure de vent sur l'aéronef 1, et calcule les consignes théoriques à envoyer aux actionneurs 4 pour compenser ces effets, et/ou
- Par des données empiriques (obtenues par exemple dans une soufflerie sur l'aéronef 1, ou par des essais hydrodynamiques sur maquette ou par des essais de l'aéronef 1 en vol, ou par des simulations numériques), obtenues en soumettant l'aéronef 1 à différentes valeurs de vent 3 et en testant différentes consignes envoyées aux actionneurs 4 jusqu'à une compensation satisfaisante des effets de ce vent 3.

La base de données 6 comprend un ordinateur, et/ou une unité centrale ou de calcul, et/ou un circuit électronique analogique (de préférence dédié), et/ou un circuit électronique numérique (de préférence dédié), et/ou un microprocesseur (de préférence dédié), et/ou des moyens logiciels. Dans le présent mode de réalisation, la base de données 6 est stockée sur de la mémoire flash dans le calculateur 5 décrit par la suite. Cette base de données 6 a typiquement la forme d'une table de correspondance, par exemple sous un format de type « .csv ».

L'aéronef 1 comprend des moyens 5 d'analyse et de commande (aussi appelé « calculateur » 5).

Les moyens d'analyse et de de commande 5 comprennent un ordinateur, et/ou une unité centrale ou de calcul, et/ou un circuit électronique analogique (de préférence dédié), et/ou un circuit électronique numérique (de préférence dédié), et/ou un microprocesseur (de préférence dédié), et/ou des moyens logiciels.

Comme on le verra par la suite, les moyens d'analyse et de commande 5 sont agencés pour (par exemple en comprenant une carte électronique dédiée) et/ou plus précisément programmés pour (par exemple en comprenant des moyens logiciels) réaliser certaines fonctions ou opérations ou commande ou calcul etc.

Comme on le verra par la suite, chacune des étapes du procédé selon l'invention mis en œuvre par l'aéronef 1 n'est pas réalisée de manière purement abstraite ou purement intellectuelle, mais :
- est effectuée de manière automatique en excluant toute intervention humaine), et
- implique l'utilisation d'au moins un moyen technique.

Les moyens 5 d'analyse et de commande sont agencés pour et/ou programmés pour:
∘ Recevoir, en provenance de l'au moins un capteur 2, des valeurs de mesure d'un vent 3,
∘ rechercher, à l'intérieur de la base de données 6, une correspondance de ces valeurs de mesure de vent en provenance de l'au moins un capteur 2,
∘ déterminer, en fonction du résultat de cette recherche, des consignes à envoyer aux actionneurs 4, et
∘ envoyer aux actionneurs 4 ces consignes déterminées (le calculateur 5 envoie les consignes qui commande les moteurs 41 et les gouvernes 42).

Les valeurs de mesure de vent comprennent typiquement (de préférence pour chaque point parmi plusieurs points de l'espace autour de l'aéronef 1):
- au moins une amplitude ou au moins une variation (cas d'une rafale du vent 3) d'amplitude du vent 3, chaque amplitude étant typiquement une vitesse ou intensité du vent. L'au moins une (variation de) amplitude peut ainsi comprendre une (variation de) vitesse locale du vent 3 et une (variation de) vitesse d'approche du vent 3 en direction de l'aéronef 1 : on comprendra par exemple que dans le cas d'une tornade, la vitesse locale du vent à l'intérieur de la tornade peut être très forte mais que cette tornade peut avoir une position fixe (et donc une vitesse d'approche nulle) par rapport à l'aéronef 1; et
- au moins une provenance (par exemple une position de vent 3 par rapport à l'aéronef 1, et/ou un numéro du capteur 2 ayant détecté ce vent 3) et/ou une direction du vent 3 (ou au moins une variation de provenance ou de direction du vent 3). L'au moins une (variation de) direction peut ainsi comprendre une (variation de) direction locale du vecteur vitesse du vent 3 et une (variation de) direction d'approche du vent 3 en direction de l'aéronef 1 : on comprendra par exemple que dans le cas d'une tornade, la vitesse locale du vent à l'intérieur de la tornade peut avoir une direction en rotation autour d'un centre de tornade mais que cette tornade peut avoir une position fixe (et donc aucune direction d'approche) par rapport à l'aéronef 1 ;
- et éventuellement une distance de ce vent 3 par rapport à l'aéronef 1.

Les moyens d'analyse et de commande 5 sont en outre agencés pour et/ou programmés pour transformer les valeurs de mesure issues de l'au moins un capteur 2 en un format adopté dans (ou compatible avec) la base de données 6 (i.e. transformer l'information de mesure en données connues ou utilisable par la base de données 6).

Typiquement, cette transformation (réalisée par le calculateur 5) consiste à reconstruire un champ de vents à partir des mesures discrètes de plusieurs des capteurs 2 (par exemple 24 faisceaux avec 10 points de mesure soit 240 points toutes les secondes pour une mesure à 1 Hz). A chaque mesure (à chaque seconde pour une mesure à 1Hz), on vient interpoler ces points afin de reconstruire un champ tridimensionnels de vecteurs représentant des directions et vitesses du vent 3 dans l'espace entourant l'aéronef 1.

Les moyens d'analyse et de commande 5 sont agencés pour et/ou programmés pour envoyer directement les consignes aux actionneurs 4, sans nécessiter d'étape de validation ou d'accord d'un intervenant humain (tel qu'un pilote de l'aéronef 1 par exemple).

Ainsi, chaque capteur 2 est relié au calculateur embarqué 5 dédié au système de stabilisation. Le protocole de communication entre les capteurs 2 et le calculateur 5 sera de préférence basé sur le CAN (pour « Controller Area Network », et qui est un bus système série) qui est adapté, par sa fiabilité, aux systèmes embarqués temps réels. Celui-ci analyse les données issues des capteurs 2 pour identifier des perturbations. Il compare ensuite ces perturbations à la base de données 6 préalablement établie. La base de données 6 est stockée sur une mémoire du calculateur 5. Les données de la base 6 définissent ou associent pour chaque « cas » (i.e. champ de vitesses et directions du vent 3), une stratégie de réponse, c'est-à-dire des consignes à l'attention des actionneurs 4. Un certain nombre de données extérieures peuvent aussi, si cela est souhaité, être prises en comptes dans le choix de la stratégie de réponse comme :
- des données de vol comme par exemple des données IAS (pour « Instant Air Speed » ou vitesse instantanée d'air ou de vent), IGS (pour « Instant Ground Speed » ou vitesse instantanée de l'aéronef 1 par rapport au sol),
- des données systèmes (moteurs, hélices, ...),
- des données de localisation GPS;
- des données d'environnement comme par exemple une topographie autour de l'aéronef, une température, une humidité, etc...

Afin de réaliser ces opérations, le calculateur 5 a une puissance de calcul correspondant typiquement à au moins celle d'un CPU Xeon E3-1220 cadencé à 3,10 GHz et une capacité de stockage d'au moins 2 Go de mémoire . L'algorithme (qui compare les valeurs acquises par les capteurs 2 et les données issues de la base 6) est par exemple réalisé dans un environnement labView ou en langage C.

Les moyens d'analyse et de commande 5 sont agencés pour ou programmés pour déterminer des consignes à envoyer aux actionneurs 4 à une fréquence d'au moins 0,1Hz, de préférence au moins 1Hz.

L'aéronef 1 comprend en outre des moyens (non illustrés) pour mesurer les effets, sur la position de l'aéronef 1, des consignes déterminées puis envoyées aux actionneurs 4 ; et les moyens d'analyse et de commande 5 sont en outre agencés pour et/ou programmés pour modifier, dans la base de données 6, les consignes associées à ces valeurs de mesure de vent en fonction des effets mesurés, de manière à améliorer les compensations de vent par les consignes contenues dans la base de données 6.

Pour mesurer ces effets, on utilise des données inertielles (obtenues avec une centrale d'inertie) ainsi que des données GPS, toutes ces données étant enregistrées.

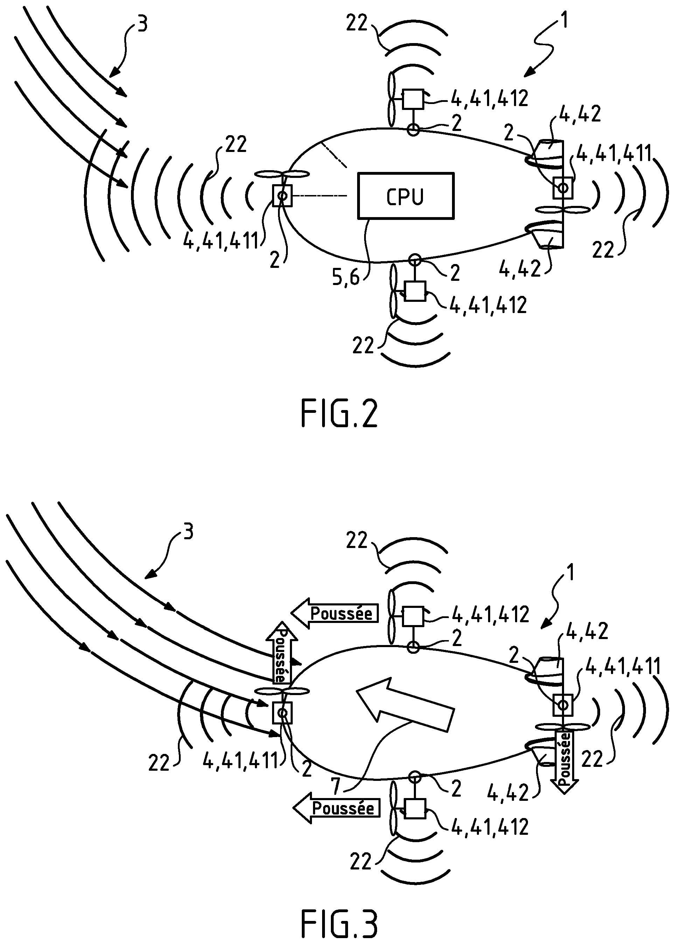

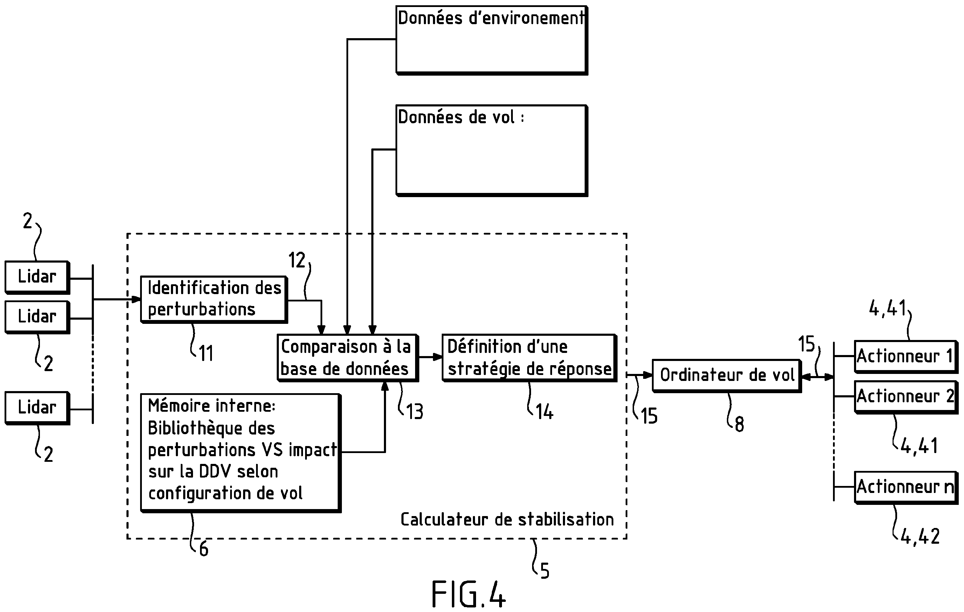

Ainsi, le procédé mis en oeuvre par l'aéronef 1 comprend typiquement :
- une mesure à distance d'un vent 3 par l'au moins un capteur 2 de l'aéronef 1 (étape 11 de la figure 4), ou de préférence de plusieurs vents selon plusieurs directions ou provenances (sur les figures la et 1b, plusieurs capteurs 2 sont disposés tout autour de l'aéronef 1 et réalisent des mesures tout autour de l'aéronef 1 ; sur la figure 2, une rafale du vent 3 est détectée par un des capteurs 2), puis
- une transformation, par les moyens d'analyse et de commande 5, des valeurs de mesure issues de l'au moins un capteur 2 en un format adopté dans (ou compatible avec) la base de données 6 (i.e. une transformation de l'information de mesure en données connues ou utilisable par la base de données 6). Typiquement, cette transformation (réalisée par le calculateur 5) consiste à reconstruire un champ de vent (i.e. un champ tridimensionnel de vecteurs représentant des directions et vitesses du vent 3 pour plusieurs points d'un espace entourant l'aéronef 1) à partir des mesures discrètes de plusieurs des capteurs 2 (par exemple 24 faisceaux avec dix points de mesure soit 240 points toutes les secondes pour une mesure à 1 Hz). A chaque mesure (à chaque seconde pour une mesure à 1Hz), on vient interpoler ces points afin de reconstruire ce champ de vecteurs.
- une analyse et une commande, par les moyens d'analyse et de commande 5, comprenant:
   o une réception, en provenance de l'au moins un capteur 2, (étape 12 de la figure 4) des valeurs de mesure du vent 3, puis
   ∘ une recherche (étape 13 de la figure 4), à l'intérieur de la base de données 6 embarquée dans l'aéronef 1, d'une correspondance de ces valeurs de mesure de vent en provenance de l'au moins un capteur 2, puis
   o une détermination (étape 14 de la figure 4), en fonction du résultat de cette recherche, des consignes à envoyer aux actionneurs 4 (i.e. le calculateur 5 analyse la situation en la comparant à la base de données 6 et détermine ainsi une stratégie de réponse), puis
   o un envoi (étape 15 de la figure 4) aux actionneurs 4 (par l'intermédiaire d'un ordinateur 8 de commande de vol de l'aéronef 1, aussi appelé « Flight Director ») de ces consignes déterminées, les moyens d'analyse et de commande 5 envoyant directement les consignes aux actionneurs 4, sans étape de validation ou d'accord d'un intervenant humain (les valeurs de mesure du vent 3 sont traitées par la calculateur 5 et sur la figure 3 on voit que la stratégie de réponse est établie et que les actionneurs 4 sont mis en marche de manière à générer sur l'aéronef 1 une poussée vectorielle 7 qui contre ou compense les effets de la rafale du vent 3 sur l'aéronef 1).

Chacune de ces étapes peut être mise en oeuvre alors que l'aéronef 1 effectue un déplacement ou effectue (ou du moins a pour objectif d'effectuer) un vol stationnaire.

L'au moins un capteur 2 mesure un vent 3 à une fréquence de mesure d'au moins 0,1Hz, de préférence au moins 1Hz. Les moyens d'analyse et de commande 5 déterminent des consignes à envoyer aux actionneurs à une fréquence de commande d'au moins 0,1Hz, de préférence au moins 1Hz.

Ce procédé est mis en œuvre en « continu ». Pour cela, l'étape de mesure est réitérée à la fréquence de mesure (fréquence de mesure d'1Hz par exemple) afin de suivre l'évolution du vent 3. L'étape de d'analyse et de commande est réitérée à la fréquence de commande.

La recherche, à l'intérieur de la base de données 6, d'une correspondance des valeurs de mesure de vent dites « mesurées » en provenance de l'au moins un capteur 2 est une recherche, à l'intérieur de la base de données 6, de valeurs de mesure de vent dites « stockées »:
- qui sont stockées dans la base de données 6 et auxquelles sont associées des consignes à l'attention des actionneurs 4 comme précédemment expliqué, et
- qui correspondent aux valeurs de mesure de vent « mesurées »:
   - exactement (le résultat de la recherche correspond à un seul « scénario ») ou
   - avec une certaine marge d'erreur, typiquement plus ou moins 1% des valeurs mesurées, ou bien qui soit les plus proches possibles parmi toutes les valeurs de mesure stockées (le résultat de la recherche correspond à un seul « scénario » ou à plusieurs scénarios tous très proches).

Dans un cas où l'étape 13 de recherche comprend une comparaison entre un champ tridimensionnel « mesuré » (en provenance de l'au moins un capteur 2) de vecteurs représentant des directions et vitesses du vent 3 dans l'espace entourant l'aéronef 1 avec l'ensemble des scénarios (i.e. des valeurs stockées ou des champs tridimensionnels de vecteurs « stockés » représentant des directions et vitesses du vent 3 dans l'espace entourant l'aéronef 1) stockés dans la base de données 6, le résultat de la recherche 13 correspond typiquement à différents scénarios tous très proches, et l'étape 14 de détermination fournira pour chaque actionneur 4 une réponse sous la forme d'une composition pondérée de plusieurs consignes stockées dans la base de données 6 et associées à ces différents scénarios (en particulier quand le vent 3 mesuré comprend plusieurs rafales dans plusieurs directions).

Ce procédé comprend en outre :
- une mesure (non illustrée sur la figure 4) des effets, sur la position de l'aéronef 1, des consignes associées envoyées aux actionneurs 4, et puis
- si ces effets ne sont pas satisfaisant (le caractère « satisfaisant » étant par exemple obtenu par comparaison des effets mesurés par rapport à un seuil de stabilité de position de l'aéronef 1 dans le cas d'un vol stationnaire) une correction ou modification (non illustrée sur la figure 4), par les moyens d'analyse et de commande 5, de la base de données 6 en fonction des effets mesurés. Le système 2, 4,5 et 6 enregistre toutes les données, et peut donc réaliser la correction ou modification :
   ∘ au cours du vol de l'aéronef 1 (« Online ») pendant lequel ces données sont mesurées, ou
   ∘ après le vol de l'aéronef 1 (« Offline ») pendant lequel ces données sont mesurées, afin de proposer des améliorations de la base de données qui seront implémentées lors des maintenances.

Ainsi, l'invention fonctionne par anticipation, c'est-à-dire que la réponse de l'aéronef 1 en matière de dynamique de vol face à un scénario donné de vent 3 est préalablement connue. Il en résulte un système qui a pour avantage d'être beaucoup plus réactif que si des calculs devaient être réalisés en temps réel. D'autre part, les réponses peuvent évoluer en fonction du retour d'expérience. Chaque réponse est analysée, et si celle-ci n'est pas satisfaisante alors le système 2, 4, 5, 6 peut faire évoluer sa stratégie.

Bien sûr, l'invention n'est pas limitée aux exemples qui viennent d'être décrits et de nombreux aménagements peuvent être apportés à ces exemples sans sortir du cadre de l'invention.

Par exemple, dans une variante, chacun parmi tout ou partie des capteurs 2 peut être remplacé par un capteur (par exemple tubes de Pitot et/ou anémomètre) qui n'est pas agencé pour mesurer à distance le vent, c'est-à-dire qui est agencé pour mesurer un vent uniquement quand ce vent est en contact de l'aéronef 1.

En outre, dans une variante « non automatique » (moins avantageuse), on peut donner au pilote de l'aéronef 1 une cartographie de l'environnement aérologique autour de l'aéronef 1 (cette cartographie étant établie à partir des valeurs mesurées par l'au moins un capteur 2) lui laissant ainsi toute la liberté d'agir en conséquence (avec par exemple une recommandation sur les choix à prendre).

## Revendications

1. Aérostat (1), comprenant :
- capteurs (2) disposés tout autour de l' aérostat , lesdits plusieurs capteurs étant agencés pour mesurer à distance un vent (3) avant que ce vent (3) ne soit en contact de l'aérostat (1),
- des actionneurs (4), agencés pour modifier une position de l' (1) en fonction de consignes reçues par ces actionneurs (4) de manière à compenser l'effet, sur l' aérostat (1), du vent (3),
- une base de données (6) embarquée dans l'aérostat (1), la base de données associant différentes valeurs de mesure de vent à différentes consignes à l'attention des actionneurs (4),
- des moyens (5) d'analyse et de commande, agencés pour ou programmés pour:
∘ recevoir des valeurs de mesure de vent en provenance des (2),
∘ rechercher, à l'intérieur de la base de données (6), une correspondance des valeurs de mesure de vent en provenance des capteurs (2) disposés tout autour de l'aérostat , et déterminer, en fonction de cette recherche, des consignes à envoyer aux actionneurs (4),
∘ envoyer aux actionneurs (4) ces consignes déterminées-**caractérisé en ce que** capteurs (2) estsont agencés pour mesurer des vents (3) selon plusieurs directions ou provenances
les capteurs étant agencés pour mesurer des valeurs de mesure de vent pour plusieurs points de l'espace autour de l'aérostat
la base de données associant des valeurs de mesure de vent à des consignes à l'attention des actionneurs (4),
les consignes étant envoyées aux actionneurs pour modifier une position de l' aérostat en vol de manière à compenser l'effet, sur l' aérostat (1), du vent (3) mesuré à distance.

2. Aérostat (1) selon la revendication 1, **caractérisé en ce qu'**il est agencé pour effectuer un vol stationnaire.

3. Aérostat (1) selon l'une quelconque des revendications précédentes, **caractérisé en ce que** les valeurs de mesure de vent comprennent :
- une amplitude ou une variation d'amplitude du vent, et/ou
- une provenance ou une direction du vent.

4. Aérostat (1) selon l'une quelconque des revendications précédentes, **caractérisé en ce que** les moyens (5) d'analyse et de commande sont agencés pour ou programmés pour envoyer directement les consignes aux actionneurs (4), sans nécessiter d'étape de validation ou d'accord d'un intervenant humain.

5. Aérostat (1) selon l'une quelconque des revendications précédentes, **caractérisé en ce que** :
- l'aérostat (1) comprend en outre des moyens pour mesurer les effets, sur la position de l' aérostat(1), des consignes déterminées puis envoyées aux actionneurs (4), et
- les moyens (5) d'analyse et de commande sont agencés pour ou programmés pour modifier la base de données (6) en fonction des effets mesurés.

6. Aérostat (1) selon l'une quelconque des revendications précédentes, **caractérisé en ce que** les actionneurs (4) comprennent des moyens de propulsion (41) et/ou des gouvernes (42).

7. Procédé de stabilisation d'un aérostat (1), comprenant :
- une mesure d'un vent (3) par capteurs (2) de l' aérostat disposés tout autour de l' aérostat , lesdits plusieurs capteurs mesurant à distance le vent (3) avant que ce vent (3) ne soit en contact de l' aérostat
- une analyse et une commande, par des moyens (5) d'analyse et de commande embarqués dans l' aérostat comprenant:
∘ une réception des valeurs de mesure du vent en provenance des capteurs (2),
∘ une recherche, à l'intérieur d'une base de données (6) embarquée dans l' aérostat et qui associe différentes valeurs de mesure de vent à différentes consignes à l'attention d'actionneurs (4) de l' aérostat d'une correspondance des valeurs de mesure de vent en provenance des capteur s (2) disposés tout autour de l' aérostat,
∘ une détermination, en fonction de cette recherche, de consignes à envoyer aux actionneurs (4),
∘ un envoi aux actionneurs (4) de ces consignes déterminées, les actionneurs (4) étant agencés pour modifier une position de l' aérostat (1) en fonction de consignes reçues par ces actionneurs (4) de manière à compenser l'effet, sur l' aérostat (1), du vent (3'),, **caractérisé en ce que** capteurs (2) mesurent des vents (3) selon plusieurs directions ou provenances
les capteurs mesurant des valeurs de mesure de vent pour plusieurs points de l'espace autour de l'aérostat
la base de données associant des valeurs de mesure de vent à des consignes à l'attention des actionneurs (4),
les consignes étant envoyées aux actionneurs pour modifier une position de l' aérostat en vol de manière à compenser l'effet, sur l' aérostat (1), du vent (3) mesuré à distance..

8. Procédé selon la revendication 7, **caractérisé en ce que** l' aérostat effectue un vol stationnaire.

9. Procédé selon l'une quelconque des revendications 7 à 8, **caractérisé en ce que** les valeurs de mesure de vent comprennent :
- une amplitude ou une variation d'amplitude du vent, et/ou
- une provenance ou une direction du vent.

10. Procédé selon l'une quelconque des revendications 7 à 4, **caractérisé en ce que** les moyens d'analyse et de commande envoient directement les consignes aux actionneurs, sans étape de validation ou d'accord d'un intervenant humain.

11. Procédé selon l'une quelconque des revendications 7 à 10, **caractérisé en ce qu'**il comprend en outre :
- une mesure des effets, sur la position de l' érostat des consignes déterminées puis envoyées aux actionneurs, et
- une modification, par les moyens d'analyse et de commande, de la base de données en fonction des effets mesurés.

12. Procédé selon l'une quelconque des revendications 7 à 11, **caractérisé en ce que** les actionneurs comprennent des moyens de propulsion et/ou des gouvernes.

## Patentansprüche

1. Luftfahrzeug (1), umfassend:
- mehrere Sensoren (2), die um das Luftfahrzeug herum angeordnet sind, wobei die mehreren Sensoren dazu eingerichtet sind, einen Wind (3) aus der Entfernung zu messen, bevor dieser Wind (3) mit dem Luftfahrzeug (1) in Kontakt kommt,
- Aktuatoren (4), die dazu eingerichtet sind, eine Lage des Luftfahrzeugs (1) in Abhängigkeit von durch diese Aktuatoren (4) empfangenen Anweisungen zu verändern, um die Auswirkung des Windes (3) auf das Luftfahrzeug (1) zu kompensieren,
- eine Datenbank (6), die in dem Luftfahrzeug (1) vorhanden ist, wobei die Datenbank verschiedene Windmesswerte mit verschiedenen Anweisungen an die Aktuatoren (4) in Beziehung setzt,
- Analyse- und Steuerungsmittel (5), die dazu eingerichtet oder programmiert sind, um:
∘ Windmesswerte von den Sensoren (2) zu empfangen,
∘ in der Datenbank (6) nach einer Übereinstimmung der von den um das Luftfahrzeug herum angeordneten Sensoren (2) stammenden Windmesswerte zu recherchieren und in Abhängigkeit von dieser Recherche Anweisungen zu ermitteln, die an die Aktuatoren (4) zu senden sind,
∘ diese ermittelten Anweisungen an die Aktuatoren (4) senden,
**dadurch gekennzeichnet, dass** die Sensoren (2) dazu eingerichtet sind, Winde (3) in mehreren Richtungen oder mehrerer Herkünfte zu messen,
wobei die Sensoren dazu eingerichtet sind, Windmesswerte für mehrere Punkte im Raum um das Luftfahrzeug herum zu messen,
wobei die Datenbank Windmesswerte mit Anweisungen an die Aktuatoren (4) in Beziehung setzt,
wobei die Anweisungen an die Aktuatoren gesendet werden, um eine Lage des Luftfahrzeugs während des Fluges so zu ändern, dass die Auswirkung des aus der Entfernung gemessenen Windes (3) auf das Luftfahrzeug (1) kompensiert wird.

2. Luftfahrzeug (1) nach Anspruch 1, **dadurch gekennzeichnet, dass** es dazu eingerichtet ist, einen stationären Flug durchzuführen.

3. Luftfahrzeug (1) nach einem der vorhergehenden Ansprüche, **dadurch gekennzeichnet, dass** die Windmesswerte umfassen:
- eine Amplitude oder eine Änderung der Amplitude des Windes, und/oder
- eine Herkunft oder eine Richtung des Windes.

4. Luftfahrzeug (1) nach einem der vorhergehenden Ansprüche, **dadurch gekennzeichnet, dass** die Analyse- und Steuerungsmittel (5) dazu eingerichtet oder programmiert sind, die Anweisungen direkt an die Aktuatoren (4) zu senden, ohne dass ein Schritt der Validierung oder Zustimmung eines menschlichen Beteiligten erforderlich ist.

5. Luftfahrzeug (1) nach einem der vorhergehenden Ansprüche, **dadurch gekennzeichnet, dass**:
- das Luftfahrzeug (1) ferner Mittel zum Messen der Auswirkungen der ermittelten und dann an die Aktuatoren (4) gesendeten Anweisungen auf die Lage des Luftfahrzeugs (1) umfasst, und
- die Analyse- und Steuerungsmittel (5) dazu eingerichtet oder programmiert sind, die Datenbank (6) in Abhängigkeit von den gemessenen Auswirkungen zu modifizieren.

6. Luftfahrzeug (1) nach einem der vorhergehenden Ansprüche, **dadurch gekennzeichnet, dass** die Aktuatoren (4) Antriebsmittel (41) und/oder Steuerflächen (42) umfassen.

7. Verfahren zur Stabilisierung eines Luftfahrzeugs (1), umfassend:
- eine Messung eines Windes (3) mittels mehrerer Sensoren (2) des Luftfahrzeugs, die um das Luftfahrzeug herum angeordnet sind, wobei die mehreren Sensoren den Wind (3) aus der Entfernung messen, bevor dieser Wind (3) mit dem Luftfahrzeug (1) in Kontakt kommt,
- eine Analyse und eine Steuerung mittels Analyse- und Steuerungsmitteln (5), die in dem Luftfahrzeug vorhanden sind, umfassend:
∘ einen Empfang von Windmesswerten von den Sensoren (2),
∘ eine Recherche in einer Datenbank (6), die im Luftfahrzeug vorhanden ist und die verschiedene Windmesswerte mit verschiedenen Anweisungen an die Aktuatoren (4) des Luftfahrzeugs in Beziehung setzt, nach einer Übereinstimmung der Windmesswerte, die von den um das Luftfahrzeug herum angeordneten Sensoren (2) stammen,
∘ eine auf dieser Recherche basierende Ermittlung von Anweisungen, die an die Aktuatoren (4) zu senden sind,
∘ ein Senden dieser ermittelten Anweisungen an die Aktuatoren (4), wobei die Aktuatoren (4) dazu eingerichtet sind, eine Lage des Luftfahrzeugs (1) in Abhängigkeit von den von diesen Aktuatoren (4) empfangenen Anweisungen so zu ändern, dass die Auswirkung des Windes (3) auf das Luftfahrzeug (1) kompensiert wird,
**dadurch gekennzeichnet, dass** die Sensoren (2) Winde (3) in mehreren Richtungen oder mehrerer Herkünfte messen,
die Sensoren Windmesswerte für mehrere Punkte im Raum um das Luftfahrzeug herum messen,
die Datenbank Windmesswerte mit Anweisungen an die Aktuatoren (4) in Beziehung setzt,
wobei die Anweisungen an die Aktuatoren gesendet werden, um eine Lage des Luftfahrzeugs während des Fluges so zu ändern, dass die Auswirkung des aus der Entfernung gemessenen Windes (3) auf das Luftfahrzeug (1) kompensiert wird.

8. Verfahren nach Anspruch 7, **dadurch gekennzeichnet, dass** das Luftfahrzeug einen stationären Flug durchführt.

9. Verfahren nach einem der Ansprüche 7 bis 8, **dadurch gekennzeichnet, dass** die Windmesswerte umfassen:
- eine Amplitude oder eine Änderung der Amplitude des Windes, und/oder
- eine Herkunft oder eine Richtung des Windes.

10. Verfahren nach einem der Ansprüche 7 bis 9, **dadurch gekennzeichnet, dass** die Analyse- und Steuerungsmittel die Anweisungen direkt an die Aktuatoren senden, ohne einen Schritt der Validierung oder Zustimmung durch einen menschlichen Beteiligten.

11. Verfahren nach einem der Ansprüche 7 bis 10, **dadurch gekennzeichnet, dass** es ferner umfasst:
- eine Messung der Auswirkungen der ermittelten und dann an die Aktuatoren gesendeten Anweisungen auf die Lage des Luftfahrzeugs, und
- eine Modifikation der Datenbank mittels der Analyse- und Steuerungsmittel in Abhängigkeit von den gemessenen Auswirkungen.

12. Verfahren nach einem der Ansprüche 7 bis 11, **dadurch gekennzeichnet, dass** die Aktuatoren Antriebsmittel und/oder Steuerflächen umfassen.

## Claims

1. A lighter-than-air aircraft (1), comprising:
- a plurality of sensors (2) placed all around the lighter-than-air aircraft, said plurality of sensors being arranged in order to remotely measure a wind (3) before this wind (3) comes into contact with the lighter-than-air aircraft (1),
- actuators (4), arranged in order to modify a position of the lighter-than-air aircraft (1) as a function of instructions received by the actuators (4) in order to compensate for the effect of the wind (3) on the lighter-than-air aircraft (1)
- an on-board database (6) in the lighter-than-air aircraft (1), the database associating different wind measurement values with different instructions intended for the actuators (4),
- analysis and control means (5), arranged or programmed to:
o receive wind measurement values originating from the sensors (2),
o search, within the database (6), for a match between the wind measurement values originating from the sensors (2) located all around the lighter-than-air aircraft, and determine, as a function of this search, instructions to be sent to the actuators (4),
o send these determined instructions to the actuators (4) **characterized in that** the sensors (2) are arranged to measure winds (3) in several directions or from several origins,
the sensors being arranged for measuring wind measurement values for several points in space around the lighter-than-air aircraft,
the database associating wind measurement values with instructions intended for the actuators (4)
the instructions being provided to the actuators in order to adjust a position of the flying lighter-than-air aircraft to compensate for the effect of the remotely measured wind (3) on the lighter-than-air aircraft (1).

2. Lighter-than-air aircraft (1) according to claim 1, **characterized in that** it is arranged in order to perform hovering flight.

3. Lighter-than-air aircraft (1) according to any one of the previous claims, **characterized in that** the wind measurement values comprise:
- an amplitude or a variation in amplitude of the wind, and/or
- an origin or a direction of the wind.

4. Lighter-than-air aircraft (1) according to any one of the previous claims, **characterized in that** the analysis and control means (5) are arranged or programmed in order to send the instructions directly to the actuators (4), without the need for a validation or approval step by a human operator.

5. Lighter-than-air aircraft (1) according to any one of the previous claims, **characterized in that**:
- the lighter-than-air aircraft (1) also comprises means for measuring the effects, on the position of the lighter-than-air aircraft (1), of the instructions determined then sent to the actuators (4), and
- the analysis and control means (5) are arranged or programmed in order to modify the database (6) as a function of the measured effects.

6. Lighter-than-air aircraft (1) according to any one of the previous claims, **characterized in that** the actuators (4) comprise propulsion means (41) and/or control surfaces (42).

7. Method for stabilizing a lighter-than-air aircraft (1), comprising:
- measuring a wind (3) using a plurality of sensors (2) of the the lighter-than-air aircraft placed all around the lighter-than-air aircraft, said plurality of sensors remotely measuring the wind (3) before this wind (3) comes into contact with the lighter-than-air aircraft (1);
- analysis and control, by on-board analysis and control means (5) in the lighter-than-air aircraft, comprising:
o receiving wind measurement values originating from the sensors (2);
o searching, within an on-board database (6) in the lighter-than-air aircraft and which associates different wind measurement values with different instructions intended for actuators (4) of the lighter-than-air aircraft, for a match with the wind measurement values originating from the sensors (2) located all around the lighter-than-air aircraft;
o determining, as a function of this search, instructions to be sent to the actuators (14);
o sending these determined instructions to the actuators (4), the actuators (4) being arranged for modifying a position of the lighter-than-air aircraft (1) as a function of instructions received by these actuators (4) in order to compensate for the effect of the wind (3) on the lighter-than-air aircraft (1),
**characterized in that** the sensors (2) measure wind (3) in several directions or from several origins,
the sensors measuring wind measurement values for several points in space around the lighter-than-air aircraft
the database associating the wind measurement values with instructions intended for the actuators (4),
the instructions being provided to the actuators to adjust a position of the flying lighter-than-air aircraft in order to compensate for the effect of the remotely measured wind (3) on the lighter-than-air aircraft (1).

8. Method according to claim 7, **characterized in that** the lighter-than-air aircraft performs hovering flight.

9. Method according to any one of claims 7 to 8, **characterized in that** the wind measurement values comprise:
- an amplitude or a variation in amplitude of the wind, and/or
- an origin or a direction of the wind.

10. Method according any one of claims 7 to 9 , **characterized in that** the analysis and control means send the instructions directly to the actuators, without a validation or approval step by a human operator.

11. Method according to any one of claims 7 to 10 , **characterized in that** it also comprises:
- measuring the effects, on the position of the lighter-than-air aircraft, of the instructions determined then sent to the actuators, and
- modifying the database by the analysis and control means, as a function of the measured effects.

12. Method according to any one of claims 7 to 11 , **characterized in that** the actuators comprise propulsion means and/or control surfaces.
